# EUROPÄISCHE PATENTSCHRIFT

(11) **EP 1 055 984 B1**
(45) Veröffentlichungstag und Bekanntmachung des Hinweises auf die Patenterteilung: **28.08.2002**
(21) Anmeldenummer: 00109635.3
(22) Anmeldetag: 05.05.2000
(51) Int. Cl.: G05B 19/42, G06F 9/42

(54) **Verfahren für eine Fehleranalyse in prozessorgesteuerten Einrichtungen**
Method for a fault analysis in microprocessor-controlled installations
Procédé d'analyse d'erreur dans des installations controllées par microprocesseur

(30) Priorität: 07.05.1999 DE 19921114
(43) Veröffentlichungstag der Anmeldung: 29.11.2000
(73) Patentinhaber: SIEMENS AKTIENGESELLSCHAFT, 80333 München (DE)
(72) Erfinder: Hoffmann, Christian, 58454 Witten (DE)

(56) Entgegenhaltungen:
- "PowerPC Embedded Application Binary Interface, 32-Bit Implementation, Version 1.0" 1. Oktober 1995 (1995-10-01) , MOTOROLA , AUSTIN, TX, USA XP002178593 * das ganze Dokument *
- PATENT ABSTRACTS OF JAPAN vol. 1997, no. 08, 29. August 1997 (1997-08-29) & JP 09 106347 A (FUJITSU LTD), 22. April 1997 (1997-04-22)

## Beschreibung

Die Erfindung betrifft ein Verfahren zur Fehleranalyse in prozessorgesteuerten Einrichtungen - in der Literatur häufig auch als 'Embedded Systems' bezeichnet - gemäß dem Oberbegriff des Patentanspruchs 1.

In prozessorgesteuerten Einrichtungen, z.B. in einer Kommunikationsanlage ist eine möglichst umfangreiche Auswertung von Ausnahmesituationen für die Qualität einer derartigen Einrichtung von großer Bedeutung. Ausnahmesituationen können dabei beispielsweise Fehler sein, die ein undefiniertes Ereignis bei der Abarbeitung eines Programms durch einen Prozessors der Einrichtung - in der Literatur häufig als 'Prozessorexceptions' bezeichnet - betreffen. Bei einem Auftreten einer Ausnahmesituation wird in der Regel das, die Ausnahmesituation auslösende Ereignis und der aktuelle Zustand der Einrichtung mittels einer Fehlerroutine - im weiteren als Exceptionhandler bezeichnet - so genau wie möglich aufgezeichnet und in einem Speicher der Einrichtung gespeichert. Anschließend ist über einen sogenannten 'Remote'-Zugang der Einrichtung, z.B. eine V.24-Schnittstelle eine Lokalisierung des Problems möglich, ohne den normalen Betrieb der Einrichtung zu stören.

Für eine Aufzeichnung des, die Ausnahmesituation auslösenden Ereignisses und des aktuellen Zustands der Einrichtung werden in Registern des Prozessors gespeicherte ereignisindividuelle Daten durch den Exceptionhandler aus den Registern ausgelesen und in einem sogenannten Stapelspeicher - in der Literatur üblicherweise als 'Stack' bezeichnet - der Einrichtung übertragen.

Bei prozessorgesteuerten Einrichtungen, deren Prozessor auf der bekannten POWER-(Performance Optimisation With Enhanced Risc)-PC-Architektur basiert und deren Programme gemäß dem EABI-(Embedded Application Binary Interface)-Standard für eine Abarbeitung durch den Prozessor kompiliert wurden, sind gemäß dem Standard "POWER PC Embedded Application Binary Interface", Version 1.0, Motorola 1995, insbesondere die Seite 6, bei auftretenden Ausnahmesituationen ('Exceptions') keine Vorschriften für die Speicherung der ereignisindividuellen Daten vorgesehen.

Gängige 'Compiler' speichern die ereignisindividuellen Daten in der Regel compilerindividuell in einem, speziell für den Exceptionhandler reservierten Speicherbereich im Stapelspeicher ab. Hierdurch können jedoch Probleme bei der Nachvollziehbarkeit des Zustands der Einrichtung zum Zeitpunkt des aufgetretenen Fehlers entstehen, da es keine Vorschriften gibt, an welcher Stelle in dem für den Exceptionhandler reservierten Speicherbereich die ereignisindividuellen Daten hinterlegt werden.

Der vorliegenden Erfindung liegt daher die Aufgabe zugrunde, ein Verfahren anzugeben, durch welches bei einer, beim Abarbeiten eines Programmoduls durch einen Prozessor einer Einrichtung auftretenden Ausnahmesituation eine Nachvollziehbarkeit des aktuellen Zustands der Einrichtung auf einfache Weise ermöglicht wird.

Gelöst wird die Aufgabe ausgehend von den Merkmalen des Oberbegriffs des Patentanspruchs 1 durch dessen kennzeichnenden Merkmale.

Zum besseren Verständnis der bei einem Auftreten einer Ausnahmesituation in prozessorgesteuerten Einrichtungen ablaufenden Verfahrensschritte erscheint es erforderlich zunächst noch einmal kurz auf bekannte Prinzipien näher einzugehen.

Bei Beginn einer Abarbeitung eines, aus mehreren Funktionen bestehenden Programmoduls durch einen Prozessor wird im zugehörigen Stapelspeicher der Einrichtung ein Speicherbereich - im weiteren als 'Stackframe' bezeichnet - für die aktuell abgearbeitete Funktion reserviert. Die Größe des reservierten 'Stackframes' hängt dabei beispielsweise von der Art und der Anzahl der, in der Funktion definierten lokalen Variablen ab. Wird nun ausgehend von der aktuell abgearbeiteten Funktion eine Unterfunktion aufgerufen, so wird im Stapelspeicher ein 'Stackframe' für diese Unterfunktion reserviert. Gleichzeitig werden die, in denjenigen Registern des Prozessors die von der Unterfunktion verwendet, d.h. überschrieben werden, gespeicherten Daten aus diesen Registern ausgelesen und in den, der Funktion zugeordneten 'Stackframe' des Stapelspeichers kopiert.

Durch einen, in einem durch den 'Compiler' ausgewählten Register - nach dem EABI-Standard im Register R1 - gespeicherten Zeiger welcher die Startadresse des 'Stackframes' im Stapelspeicher repräsentiert, ist ein Auslesen der im Stapelspeicher hinterlegten, der Funktion zugeordneten Daten möglich. Diese Daten umfassen dabei beispielsweise aktuelle Werte von lokalen und an die Unterfunktion zu übergebenden Variablen. Zusätzlich ist in einem der Register - nach dem EABI-Standard im sogenannten Link-Register LR - eine Rücksprungadresse gespeichert, welche diejenige Adresse angibt, an welcher Stelle der Prozessor nach Beendigung der Abarbeitung der Funktion die Abarbeitung fortsetzen soll. Im Rahmen eines Unterfunktionsaufrufes ausgehend von einer Funktion wird die Rücksprungadresse der Funktion gemäß dem Standard "System V Application Binary Interface", POWER PC Processor Supplement, SunSoft, September 1995, insbesondere Kapitel 3, Seiten 17ff, an einer definierten Stelle in dem, der Funktion zugeordneten 'Stackframe' abgelegt. Die Rücksprungadresse wird dabei direkt hinter dem sogenannten "Back chain", einen Zeiger auf einen vorhergehenden 'Stackframe' im Stapelspeicher, gespeichert.

Nach Beendigung einer erfolgreichen Abarbeitung der Unterfunktion werden mittels des, im Register R1 gespeicherten Zeigers - im weiteren als 'Stackpointer' bezeichnet - die im 'Stackframe' der Funktion gespeicherten Daten ausgelesen und mittels dieser Daten und der im Link-Register LR gespeicherten Rücksprungadresse die Abarbeitung der Funktion an der, durch den Unterfunktionsaufruf unterbrochenen Stelle durch den Prozessor fortgesetzt.

Tritt dagegen bei der Abarbeitung der Unterfunktion ein Fehler - beispielsweise eine Prozessorexception - auf, wird abhängig von der Art des Fehlers ein fehlerspezifischer Exceptionhandler aktiviert, der die in allen Registern des Prozessors aktuell gespeicherten, der Unterfunktion zugeordneten Daten aus den Registern ausliest und diese Daten und die Rücksprungadresse im Stapelspeicher abspeichert.

Bei prozessorgesteuerten Einrichtungen, deren Prozessor auf der bekannten POWER-PC-Architektur basiert und deren Programme gemäß dem EABI-Standard für eine Abarbeitung durch den Prozessor kompiliert wurden, gibt es bei auftretenden Ausnahmesituationen ('Exceptions') keine Vorschriften für die Speicherung der Daten im Stapelspeicher. Gängige 'Compiler' speichern die Daten und die Rücksprungadresse in der Regel in einem dem Exceptionhandler zugeordneten 'Stackframe' des Stapelspeichers ab. Da es keine Vorschriften gibt, an welcher Stelle in dem, dem Exceptionhandler zugeordneten 'Stackframe' die Daten gespeichert werden, ist eine Nachvollziehbarkeit des Zustands der Einrichtung zum Zeitpunkt des aufgetretenen Fehlers nicht ohne zusätzlichen Aufwand möglich.

Ein wesentlicher Vorteil des erfindungsgemäßen Verfahrens besteht nun darin, daß durch eine Erweiterung des Standards "POWER PC Embedded Application Binary Interface", Version 1.0, Motorola 1995, dahingehend, daß bei einem Auftreten einer Ausnahmesituation bei einer Abarbeitung eines aus mehreren Funktionen bestehenden Programmoduls, die im sogenannten Link-Register LR gespeicherte Rücksprungadresse der aktuell abgearbeiteten Funktion durch den Exceptionhandler aus dem Link-Register LR ausgelesen wird, und daß die Rücksprungadresse, wie im Standard "System V Application Binary Interface", POWER PC Processor Supplement, SunSoft, September 1995, für einen normalen Unterfunktionsaufruf festgelegt, im 'Stackframe' der, die Ausnahmesituation auslösenden Funktion abgelegt wird, so daß eine Auswertung der im Stapelspeicher gespeicherten Informationen auf einfache Weise möglich ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch ein zusätzliches Speichern der Rücksprungadresse der, die Ausnahmesituation auslösenden Funktion im 'Stackframe' des Exceptionhandlers eine Kompatibilität zu bereits bestehenden 'Compilern' gewahrt wird. Das Speichern der Rücksprungadresse der, die Ausnahmesituation auslösenden Funktion in dem, die Ausnahmesituation auslösenden Funktion zugeordneten 'Stackframe' kann dabei beispielsweise beim 'Compiler' als Option aktivierbar bzw. deaktivierbar sein.

Ein Ausführungsbeispiel der Erfindung wird im folgenden anhand der Zeichnung näher erläutert.

Dabei zeigen:
- Fig. 1:: ein Strukturbild zur schematischen der am erfindungsgemäßen Verfahren beteiligten wesentlichen Funktionseinheiten;
- Fig. 2:: in einer schematischen Darstellung ein Programmodul mit einer zugehörigen Strukturierung des Stapelspeichers.

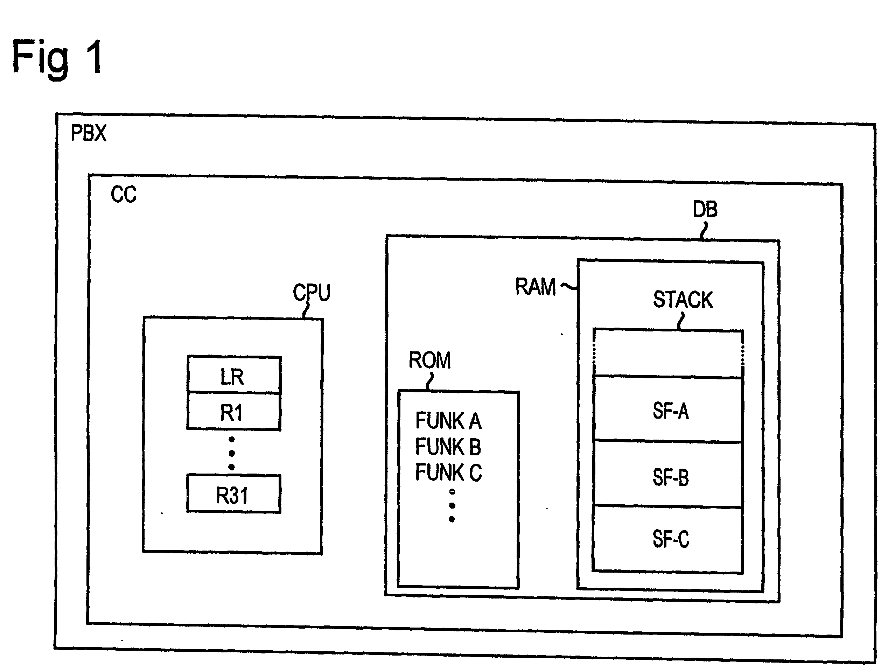

Fig. 1 zeigt eine schematische Darstellung einer prozessorgesteuerten Einrichtung, in der Literatur häufig auch als 'Embedded System' bezeichnet. Beispielhaft ist hierbei eine Kommunikationsanlage PBX (Private Branche Exchange) dargestellt. In einer zentralen Steuereinrichtung CC der Kommunikationsanlage PBX ist ein, Steueraufgaben für die Kommunikationsanlage PBX übernehmender Prozessor CPU angeordnet, welcher eine Mehrzahl von Registern LR; R1,...,R31 aufweist. Der Prozessor basiert auf der bekannten POWER-PC-Architektur (Performance Optimisation With Enhanced Risc), die im Gegensatz zur bekannten CISC-Architektur (Complex Instruction Set Computer) einen reduzierten Befehlssatz RISC (Reduced Instruction Set Computer) aufweist. Die Register LR; R1,...,R31 dienen zur Speicherung von, im Rahmen einer Funktionsabarbeitung durch den Prozessor CPU zwischenzuspeichernden, funktionsindividuellen Daten.

Der Prozessor CPU ist über einen - nicht dargestellten - Systembus der Kommunikationsanlage PBX mit einer Datenbasis DB verbunden. Die Datenbasis DB weist in der Regel einen flüchtigen Speicher - in der Literatur häufig mit RAM (Random Access Memory) abgekürzt - beispielsweise zur Speicherung von aktuellen Daten und einen nicht-flüchtigen Speicher - in der Literatur häufig mit ROM (Read Only Memory) abgekürzt - beispielsweise zur Speicherung von Programmen in der Kommunikationsanlage PBX auf. Beim vorliegenden Ausführungsbeispiel sind im nicht-flüchtigen Speicher ROM drei, einem Programmodul zugeordnete Funktionen FUNK A, FUNK B, FUNK C gespeichert, die gemäß dem EABI-Standard (Embedded Application Binary Interface) für eine Abarbeitung durch den Prozessor CPU kompiliert, d.h. von einer Programmiersprache in, vom Prozessor CPU interpretierbare Anweisungen übersetzt sind.

Bei einer Abarbeitung der Funktionen FUNK A, FUNK B, FUNK C durch den Prozessor CPU werden in einem Speicherbereich - im weiteren mit Stapelspeicher STACK bezeichnet - des flüchtigen Speichers RAM den jeweiligen Funktionen FUNK A, FUNK B, FUNK C zugeordnete Speicherbereiche - im weiteren als Stackframes bezeichnet - reserviert. Beispielhaft sind drei Stackframes SF-A, SF-B, SF-C dargestellt, die jeweils den Funktionen FUNK A, FUNK B, FUNK C zugeordnet sind. Die Größe des reservierten Stackframes hängt dabei beispielsweise von der Art und der Anzahl der in einer Funktion FUNK A, FUNK B, FUNK C definierten lokalen Variablen ab. Nach einer Beendigung der Abarbeitung einer Funktion FUNK A, FUNK B, FUNK C durch den Prozessor CPU wird der, durch den jeweiligen Stackframe SF-A, SF-B, SF-C reservierte Speicherbereich des Stapelspeichers STACK für eine Reservierung durch andere Funktionen freigegeben.

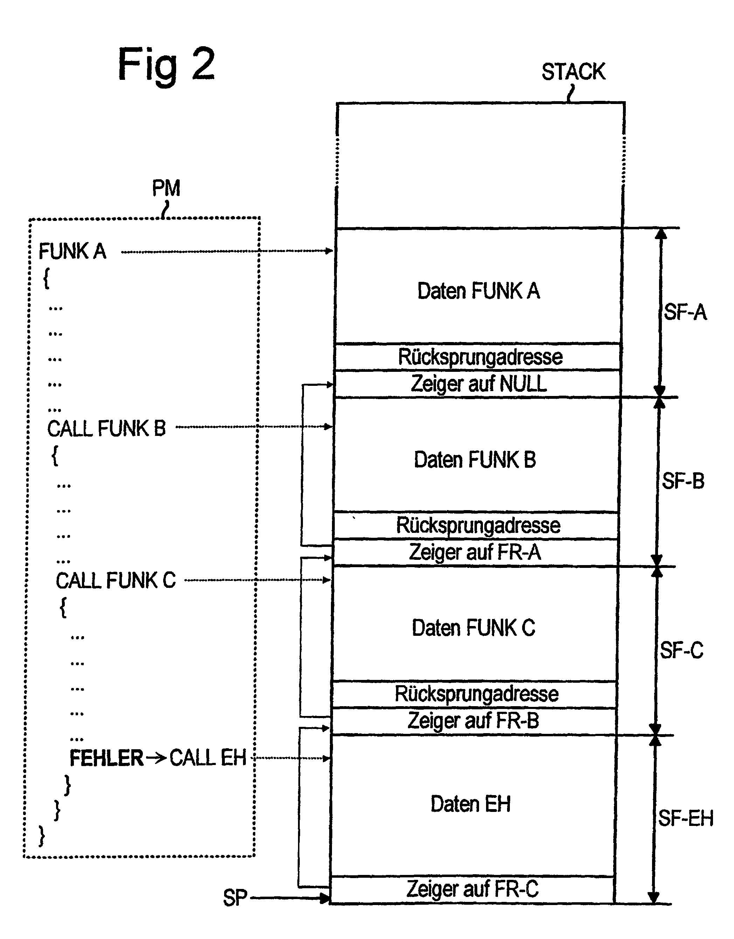

Fig. 2 zeigt in einer schematischen Darstellung ein aus mehreren Funktionen bestehendes Programmodul PM mit der, bei der Abarbeitung des Programmodulss PM durch den Prozessor CPU zugehörigen Strukturierung des Stapelspeichers STACK zum Zeitpunkt eines Auftretens eines Fehlers. Das Programmodul PM (durch die gestrichelte Linie angedeutet) beginnt mit einer Funktion FUNK A. Die Funktion FUNK A ruft eine erste Unterfunktion FUNK B auf, die wiederum eine zweite Unterfunktion FUNK C aufruft. Tritt bei der Abarbeitung der Funktion FUNK A oder bei der Abarbeitung der ersten oder der zweiten Unterfunktion FUNK B, FUNK C ein Fehler auf, wird automatisch ein fehlerspezifischer Exceptionhandler EH aufgerufen. Im vorliegenden Ausführungsbeispiel tritt der Fehler bei der Abarbeitung der zweiten Unterfunktion FUNK C auf. Im folgenden wird von einer Prozessorexception als Fehler ausgegangen, d.h. von einer direkt durch den Prozessor CPU der Kommunikationsanlage PBX verursachten Ausnahmesituation. Beispiele für derartige Ausnahmesituationen sind beispielsweise eine Division durch Null oder ein Zugriff durch den Prozessor CPU auf eine nicht vorhandene Speicheradresse.

Bei Beginn der Abarbeitung der Funktion FUNK A durch den Prozessor CPU wird im Stapelspeicher STACK ein, der Funktion FUNK A zugeordneter Stackframe SF-A reserviert. Der Stackframe dient dabei unter anderem zur Zwischenspeicherung von, in der Funktion FUNK A verwendeten lokalen Variablen. In derjenigen Speicherzelle des, der Funktion FUNK A zugeordneten Stackframes SF-A mit der kleinsten Adresse ist dabei ein Zeiger, der sogenannte 'Back Chain' auf einen vorhergehenden Stackframe gespeichert. Da im vorliegenden Ausführungsbeispiel kein vorhergehender Stackframe vorhanden ist, verweist der Zeiger auf den Wert NULL. Ein Register R1 des Prozessors CPU beinhaltet den sogenannten 'Stackpointer', d.h. die Adresse derjenigen Speicherzelle des, der Funktion FUNK A zugeordneten Stackframes SF-A, in welcher der 'Back Chain' gespeichert ist. Mittels dieses 'Stackpointers' ist ein Zugriff auf die im Stapelspeicher STACK gespeicherten, der Funktion FUNK A zugeordneten Daten möglich.

Im Rahmen eines erfolgenden Aufrufs der ersten Unterfunktion FUNK B ausgehend von der Funktion FUNK A wird im Stapelspeicher STACK ein, der ersten Unterfunktion FUNK B zugeordneter Stackframe SF-B reserviert. Die Größe des, der ersten Unterfunktion FUNK B zugeordneten Stackframes SF-B hängt dabei z.B. wiederum von der Art und der Anzahl der in der ersten Unterfunktion FUNK B definierten lokalen Variablen, aber auch von der Art und der Anzahl der von der Funktion FUNK A an die ersten Unterfunktion FUNK B übergebenen Variablen ab. Hierbei wird in derjenigen Speicherzelle des, der ersten Unterfunktion FUNK B zugeordneten Stackframes SF-B mit der kleinsten Adresse der 'Back Chain' auf den, der Funktion FUNK A zugeordneten Stackframe SF-A gespeichert und gleichzeitig der im Register R1 des Prozessors CPU gespeicherte 'Stackpointer' auf die Adresse des 'Back Chains' des, der ersten Unterfunktion FUNK B zugeordneten Stackframes SF-B gesetzt.

Zusätzlich werden die in denjenigen Registern R1,...,R31 des Prozessors CPU, die von der ersten Unterfunktion FUNK B verwendet, d.h. überschrieben werden, gespeicherten Daten in den, der Funktion FUNK A zugeordneten Stackframe SF-A kopiert. Hierbei wird eine im Link-Register LR des Prozessors CPU gespeicherte sogenannte Rücksprungadresse für die Funktion FUNK A in die, über dem 'Back Chain' angeordneten Speicherzelle des, der Funktion FUNK A zugeordneten Stackframes SR-A eingetragen. Die Rücksprungadresse gibt in diesem Fall diejenige Adresse an, an der nach Beendigung der Abarbeitung der Funktion FUNK A eine Abarbeitung durch den Prozessor CPU fortgesetzt werden soll.

Nach einer erfolgreichen Beendigung der Abarbeitung der ersten Unterfunktion FUNK B würde der durch den, der ersten Unterfunktion FUNK B zugeordnete Stackframe SF-B reservierte Speicherbereich des Stapelspeichers STACK freigegeben und der 'Stackpointer' auf den 'Back Chain' des, der Funktion FUNK A zugeordneten Stackframes SF-A zurückgesetzt werden. Somit können mittels des 'Stackpointers' die, der Funktion FUNK A zugeordneten Daten aus dem Stapelspeicher STACK ausgelesen werden und mittels der Rücksprungadresse die Bearbeitung der Funktion FUNK A an der, durch das Aufrufen der ersten Unterfunktion FUNK B unterbrochenen Stelle mit den relevanten Daten fortgesetzt werden.

Im Rahmen eines erfolgenden Aufrufs der zweiten Unterfunktion FUNK C ausgehend von der ersten Unterfunktion FUNK B wird im Stapelspeicher STACK ein, der zweiten Unterfunktion FUNK C zugeordneter Stackframe SF-C reserviert. Die Größe des, der zweiten Unterfunktion FUNK C zugeordneten Stackframes SF-C hängt dabei z.B. wiederum von der Art und der Anzahl der in der zweiten Unterfunktion FUNK C definierten lokalen Variablen, aber auch von der Art und der Anzahl der von der ersten Unterfunktion FUNK B an die zweite Unterfunktion FUNK C übergebenen Variablen ab. Hierbei wird in derjenigen Speicherzelle des, der zweiten Unterfunktion FUNK C zugeordneten Stackframes SF-C mit der kleinsten Adresse der 'Back Chain' auf den, der ersten Unterfunktion FUNK B zugeordneten Stackframe SF-B gespeichert und gleichzeitig der im Register R1 des Prozessors CPU gespeicherte 'Stackpointer' auf die Adresse des 'Back Chains' des, der zweiten Unterfunktion FUNK C zugeordneten Stackframes SF-C gesetzt.

Zusätzlich werden die in denjenigen Registern R1,...,R31 des Prozessors CPU, die von der zweiten Unterfunktion FUNK C verwendet werden, gespeicherten Daten in den, der ersten Unterfunktion FUNK B zugeordneten Stackframe SF-B kopiert. Hierbei wird die im Link-Register LR des Prozessors CPU gespeicherte Rücksprungadresse für die erste Unterfunktion FUNK B in die, über dem 'Back Chain' angeordneten Speicherzelle des, der ersten Unterfunktion FUNK B zugeordneten Stackframes SF-B eingetragen. Die Rücksprungadresse gibt in diesem Fall diejenige Adresse an, an der nach Beendigung der Abarbeitung der ersten Unterfunktion FUNK B eine Abarbeitung der Funktion FUNK A fortgesetzt werden soll.

Tritt bei der Abarbeitung der zweiten Unterfunktion FUNK C ein Fehler, d.h. eine Prozessorexception auf, wird durch den Prozessor CPU die Art des aufgetretenen Fehlers ermittelt und anhand einer in der Kommunikationsanlage PBX gespeicherten - nicht dargestellten - Tabelle ein, dem Fehler entsprechender Exceptionhandler EH gestartet. Im Rahmen des Aufrufs des Exceptionhandler EH wird im Stapelspeicher STACK ein, dem Exceptionhandler EH zugeordneter Stackframe SF-EH reserviert. Hierbei wird in derjenigen Speicherzelle des, dem Exceptionhandler EH zugeordneten Stackframes SF-EH mit der kleinsten Adresse der 'Back Chain' auf den, der zweiten Unterfunktion FUNK C zugeordneten Stackframe SF-C gespeichert und gleichzeitig der im Register R1 des Prozessors CPU gespeicherte 'Stackpointer' auf die Adresse des 'Back Chains' des, dem Exceptionhandler EH zugeordneten Stackframes SF-EH gesetzt.

Zusätzlich werden die aktuell in allen Registern R1,...,R31 des Prozessors CPU gespeicherten Daten in den, dem Exceptionhandler EH zugeordneten Stackframe SF-EH kopiert. Die Rücksprungadresse für die zweite Unterfunktion FUNK C wird aus dem Link-Register LR des Prozessors CPU ausgelesen und an der entsprechenden Stelle in dem, der zweiten Unterfunktion FUNK C zugeordneten Stackframe SF-C, d.h. hinter dem 'Back Chain' des, der zweiten Unterfunktion FUNK C zugeordneten Stackframes SF-C gespeichert.

Mittels des 'Stackpointers', der auf die Adresse des 'Back Chains' des, dem Exceptionhandler EH zugeordneten Stackframes SF-EH zeigt und dem 'Back Chain' des, dem Exceptionhandler EH zugeordneten Stackframes SF-EH kann nach einem, bei der Abarbeitung einer Funktion bzw. Unterfunktion aufgetretenen Fehler die Rücksprungadresse der, den Fehler auslösenden Funktion bzw. Unterfunktion ermittelt werden. Mittels der Rücksprungadresse und der im Stapelspeicher STACK gespeicherten Daten ist nun eine Auswertung des aktuellen Zustands der Kommunikationsanlage möglich, d.h. es kann nachvollzogen werden, welche Funktionen bis zum Auftreten des Fehlers vom Prozessor CPU abgearbeitet wurden und durch welche Funktion der Fehler ausgelöst wurde. Da auch die in den 'Compilern' verwendeten Fehlersuchprogramme - in der Literatur häufig als 'Debugger' bezeichnet - auf die Rücksprungadresse zugreifen ist eine Fehlersuche ('debuggen') mittels dieser bestehenden Fehlersuchprogramme möglich.

Der, bei einem Auftreten eines Fehlers für ein Übertragen der in den Registern LR; R1,...,R31 des Prozessors CPU gespeicherten Daten in den Stapelspeicher STACK verwendete Exceptionhandler EH wird heute in der Regel nicht mehr in einer sogenannten Assemblersprache des Prozessors CPU - d.h. in einer direkt durch den Prozessor CPU interpretierbaren Maschinensprache - kodiert. Moderne 'Compiler' bieten die Möglichkeit, den Exceptionhandler EH in einer höheren Programmiersprache, z.B. als C-Routine zu kodieren, die dem 'Compiler' durch ein Schlüsselwort (z.B. #pragma interrupt) als Exceptionroutine kenntlich gemacht wird. Der 'Compiler' erzeugt für diese Exceptionroutine anschließend selbständig den, vom Prozessor CPU interpretierbaren Code.

Für eine Realisierung des erfindungsgemäßen Verfahrens, bei dem die Rücksprungadresse der, den Fehler auslösenden zweiten Unterfunktion FUNK C im Stackframe SF-C der zweiten Unterfunktion FUNK C gespeichert wird und nicht wie im Stand der Technik üblich im Stackframe SF-EH des Exceptionhandlers EH kann durch Einbringen von Assembleranweisungen in die Exceptionroutine mittels des sogenannten 'Inline Assemblers' erfolgen. Die Assembleranweisungen umfassen dabei Befehle, die das Auslesen der Rücksprungadresse aus dem Link-Register LR des Prozessors CPU und das Abspeichern der Rücksprungadresse im Stackframe SF-C der, den Fehler auslösenden Funktion veranlassen. Alternativ kann der Exceptionhandler EH aber auch vollständig in Assemblersprache kodiert werden, so daß kein 'Compiler' benötigt wird.

Alternativ kann vorgesehen sein, die Rücksprungadresse der, den Fehler auslösenden Funktion wie üblich in dem, dem Exceptionhandler EH zugeordneten Stackframe SF-EH abzulegen. Beispielsweise könnte das Ablegen der Rücksprungadresse der, den Fehler auslösenden Funktion FUNK C im dem, der Funktion FUNK C zugeordneten Stackframe SF-C als zusätzliches Leistungsmerkmal eines 'Compilers' zu- bzw. abschaltbar sein, so daß auf diese Weise eine Kompatibilität zu älteren Versionen des 'Compilers' gewährleistet wäre.

## Patentansprüche

1. Verfahren für eine Fehleranalyse in einer prozessorgesteuerten Einrichtung (PBX),
wobei zur Realisierung eines Prozesses eine Abarbeitung eines, nach dem EABI-Standard (Embedded Application Binary Interface) kompilierten Programmoduls (PM) durch einen RISC-(Reduced Instruction Set Computer)-Prozessor (CPU) erfolgt, bei der in Registern (LR; R1, ...,R32) des RISC-Prozessors (CPU) prozeßindividuelle Daten und eine Rücksprungadresse gespeichert sind, an der nach Beendigung des Prozesses eine Abarbeitung durch den RISC-Prozessor (CPU) fortgesetzt werden soll,
wobei bei einem Auftreten eines Fehlers während des Prozesses eine Fehlerroutine (EH) gestartet wird, anhand der die in den Registern (LR; R1,...,R31) gespeicherten prozeßindividuellen Daten und die Rücksprungadresse in einen Speicher (STACK) der Einrichtung (PBX) übertragen werden,
**dadurch gekennzeichnet,**
**daß** von der Fehlerroutine (EH) ein Abspeichern der Rücksprungadresse in einem, dem Prozeß zugeordneten Bereich (SF-C) des Speichers (STACK) veranlaßt wird.

2. Verfahren nach Anspruch 1,
**dadurch gekennzeichnet,**
**daß** die prozeßindividuellen Daten und die Rücksprungadresse zusätzlich in einem, der Fehlerroutine (EH) zugeordneten Bereich (SF-EH) des Speichers (STACK) gespeichert werden.

3. Verfahren nach Anspruch 1 oder 2,
**dadurch gekennzeichnet,**
**daß** der Fehler eine, den RISC-Prozessor (CPU) betreffende Ausnahmesituation bei der Abarbeitung des Programmoduls (PM) ist.

4. Verfahren nach einem der vorhergehenden Ansprüche,
**dadurch gekennzeichnet,**
**daß** bei der Abarbeitung des, aus mehreren Funktionen (FUNK A, FUNK B, FUNK C) bestehenden Programmoduls (PM) automatisch ein Bereich (SF-A) des Speichers (STACK) für die aktuell abgearbeitete Funktion (FUNK A) reserviert wird,
und **daß** bei einem Aufrufen einer Unterfunktion (FUNK B) ausgehend von der Funktion (FUNK A), die in den Registern (LR; R1,...,R31) gespeicherten prozeßindividuellen Daten und die, der Funktion (FUNK A) zugeordnete Rücksprungadresse in dem, der Funktion (FUNK A) zugeordneten Bereich (SF-A) des Speichers (STACK) gespeichert werden.

5. Verfahren nach einem der vorhergehenden Ansprüche,
**dadurch gekennzeichnet,**
**daß** der Prozessor (CPU) auf der bekannten POWER-(Performance Optimisation With Enhanced Risc)-PC-Architektur basiert.

## Claims

1. Method for error analysis in a processor-controlled device (PBX),
where a process is implemented by virtue of a program module (PM) compiled on the basis of the EABI standard (Embedded Application Binary Interface) being executed by an RISC (Reduced Instruction Set Computer) processor (CPU), in which case registers (LR; R1, ..., R32) in the RISC processor (CPU) store process-specific data and a return address at which execution by the RISC processor (CPU) is intended to be continued after the process has ended,
where the occurrence of an error during the process starts an error routine (EH) which is used to transfer the process-specific data and the return address stored in the registers (LR; R1, ..., R31) to a memory (STACK) in the device (PBX),
**characterized**
**in that** the error routine (EH) prompts storage of the return address in an area (SF-C) of the memory (STACK) which is associated with the process.

2. Method according to Claim 1,
**characterized**
**in that** the process-specific data and the return address are additionally stored in an area (SF-EH) of the memory (STACK) which is associated with the error routine (EH).

3. Method according to Claim 1 or 2,
**characterized**
**in that** the error is an exception affecting the RISC processor (CPU) during execution of the program module (PM).

4. Method according to one of the preceding claims,
**characterized**
**in that** the execution of the program module (PM), which comprises a plurality of functions (FUNK A, FUNK B, FUNK C), automatically reserves an area (SF-A) of the memory (STACK) for the currently executed function (FUNK A),
and **in that** a call to a subfunction (FUNK B) from the function (FUNK A) stores the process-specific data stored in the registers (LR; R1, ..., R31) and the return address associated with the function (FUNK A) in the area (SF-A) of the memory (STACK) which is associated with the function (FUNK A).

5. Method according to one of the preceding claims,
**characterized**
**in that** the processor (CPU) is based on the known POWER (Performance Optimization Width Enhanced Risc) PC architecture.

## Revendications

1. Procédé d'analyse d'erreur dans une installation (PBX) contrôlée par processeur,
dans lequel, pour réaliser un processus, une exécution d'un module de programme (PM) compilé selon le standard EABI (Embedded Application Binary Interface) est effectuée par un processeur RISC (Reduced Instruction Set Computer) (CPU), dans laquelle sont enregistrées dans des registres (LR ; R1, ..., R32) du processeur RISC (CPU) des données propres au processus et une adresse de retour à laquelle une exécution par le processeur RISC (CPU) doit être poursuivie une fois le processus terminé,
dans lequel, lors d'une apparition d'une erreur pendant le processus, une routine d'erreur (EH) est lancée à l'aide de laquelle les données propres au processus et l'adresse de retour enregistrées dans les registres (LR ; R1, ... R31) sont transférées dans une mémoire (STACK) de l'installation (PBX),
**caractérisé en ce que** la routine d'erreur (EH) ordonne un enregistrement de l'adresse de retour dans une zone (SF-C) de la mémoire (STACK) affectée au processus

2. Procédé selon la revendication 1,
**caractérisé en ce que** les données propres au processus et l'adresse de retour sont enregistrées en outre dans une zone (SF-EH) de la mémoire (STACK) affectée à la routine d'erreur (EH).

3. Procédé selon la revendication 1 ou 2,
**caractérisé en ce que** l'erreur est une situation d'exception concernant le processeur RISC (CPU) lors de l'exécution du module de programme (PM).

4. Procédé selon l'une quelconque des revendications précédentes,
**caractérisé en ce que** lors de l'exécution du module de programme (PM) comprenant plusieurs fonctions (FUNK A, FUNK B, FUNK C), une zone (SF-A) de la mémoire (STACK) est automatiquement réservée pour la fonction (FUNK A) en cours d'exécution,
et **en ce que** lors d'un appel d'une sous-fonction (FUNK B) à partir de la fonction (FUNK A), les données propres au processus enregistrées dans les registres (LR ; R₁, ..., R31) et l'adresse de retour affectée à la fonction (FUNK A) sont enregistrées dans la zone (SF-A) de la mémoire (STACK) affectée à la fonction (FUNK A).

5. Procédé selon l'une quelconque des revendications précédentes,
**caractérisé en ce que** le processeur (CPU) est basé sur l'architecture PC connue POWER (Performance Optimisation With Enhanced Risc).
